# EUROPEAN PATENT SPECIFICATION

(11) **EP 4 189 032 B1**
(45) Date of publication and mention of the grant of the patent: **02.07.2025**
(21) Application number: 21749344.4
(22) Date of filing: 29.07.2021
(51) Int. Cl.: C09K 11/02, C09K 11/66, C09K 11/59, H05B 33/20, H05B 33/14

(54) **METHOD FOR PREPARING METAL HALIDE NANOCOMPOSITES**
VERFAHREN ZUR HERSTELLUNG VON METALLHALOGENID-NANOKOMPOSITEN
PROCÉDÉ DE PRÉPARATION DE NANOCOMPOSITES D'HALOGÉNURE MÉTALLIQUE

(30) Priority: 29.07.2020 IT 202000018481
(43) Date of publication of application: 07.06.2023
(73) Proprietor: Fondazione Istituto Italiano di Tecnologia, 16163 Genova (IT); Quantum Advanced Solutions Ltd, Southampton, Hampshire SO16 7NP (GB)
(72) Inventor: PARK, Sungwook, 16163 Genova (IT); AN, Mai Ngoc, 16163 Genova (IT); MANNA, Liberato, 16163 Genova (IT); DE TRIZIO, Luca, 16163 Genova (IT); LUTFULLIN, Marat, Southampton Science Park Southampton, Hampshire SO16 7NP (GB); SINATRA, Lutfan, Southampton Science Park Southampton, Hampshire SO16 7NP (GB); BAKR, Osman Mohammed, Southampton Science Park Southampton, Hampshire SO16 7NP (GB)
(74) Representative: Studio Torta S.p.A.
(86) International application number: PCT/IB2021/056931
(87) International publication number: WO 2022/024037

(56) References cited:
- EP-A1- 3 570 342
- CN-A- 110 078 116
- US-A1- 2017 153 382
- PENG CHEN ET AL: "In situ growth of ultrasmall cesium lead bromine quantum dots in a mesoporous silica matrix and their application in flexible light-emitting diodes", NANOSCALE, vol. 11, no. 35, 1 January 2019 (2019-01-01), United Kingdom, pages 16499 - 16507, XP055750687, ISSN: 2040-3364, DOI: 10.1039/C9NR05731E
- DMITRY N. DIRIN ET AL: "Harnessing Defect-Tolerance at the Nanoscale: Highly Luminescent Lead Halide Perovskite Nanocrystals in Mesoporous Silica Matrixes", NANO LETTERS, vol. 16, no. 9, 23 August 2016 (2016-08-23), US, pages 5866 - 5874, XP055628160, ISSN: 1530-6984, DOI: 10.1021/acs.nanolett.6b02688

## Description

### CROSS-REFERENCE TO RELATED APPLICATIONS

This patent application claims priority from Italian patent application no. 102020000018481 filed on 29/07/2020.

### FIELD OF THE INVENTION

The present invention relates to a method for the preparation of luminescent nanocomposites with increase stability properties.

### BACKGROUND OF THE INVENTION

Nanocrystals (NCs) of lead halide perovskites (LHPs) of APbX₃ (A=CH₃NH₃, HC(NH)NH₂, or Cs and X=halogen anion) have excellent optical properties which make them promising candidates for different optoelectronic applications such as light-emitting diodes and displays. These NCs are characterized by a high photoluminescence quantum yield (PLQY) and high color purity (narrow PL emission peaks).

However, these materials suffer from different drawbacks, with the main one being their poor stability under different conditions: when exposed to humidity, high temperature and photon irradiation. Indeed, LHPs are highly unstable in polar solvents and can be even degraded by the moisture present in the air. These problems have to be effectively solved in order to being able to fabricate highly performing devices based on LHP NCs.

Different strategies aiming at protecting LHPs have been developed and tested. LHPs NCs have been encapsulated in polymers, inorganic matrixes (e.g., SiO₂, TiO₂, Al₂O₃) or hybrid compounds (e.g., metal-organic frameworks - MOFs) with a consequent improvement in their photo, air, moisture and thermal stabilities.

Polymers were demonstrated to protect LHPs from moisture or water, but they have a weak thermal resistance.

MOFs can provide thermal- and photo- stability, but cannot provide efficient protection against water. In addition, the reported PLQYs of LHPs/MOFs composites are ~62% or lower, which is not enough for the commercial standards required for optoelectronic devices.

On the other hand, inorganic matrixes, and in particular metal oxides, thanks to their robustness, have the potential to ensure both thermal and water stability to LHPs, while preserving their high PL emission.

Among the different inorganic matrixes, mesoporous silica (m-SiO₂) is one of the best candidates for the encapsulation of LHPs for the following reasons: i) it is non-toxic, earth abundant, and cheap; ii) it has an excellent chemical and thermal stability; iii) its surface can be easily functionalized (to make it hydrophilic or hydrophobic); iv) the size of the pores can be finely tuned (from 2 to 50nm). In fact, m-SiO₂ has been successfully employed as a matrix, with LHPs NCs having been grown inside its cavities/pores, following various approaches (see Dirin et al. Nano Lett. 2016, 16, 9, 5866-5874 and Chen et al. Nanoscale, 2019, 11, 16499). The resulting composites exhibited a bright PL emission (with the maximum PLQY achieved being 83%) and featured enhanced stability against photon irradiation, humidity, and high temperature (100°C). In addition, by selecting m-SiO₂ having a desired pore size, the size of the LHPs NC growing inside the pores can be easily adjusted in order to control the emission wavelength.

Overall, the reported encapsulation procedures are not capable of delivering LHP based composites exhibiting a high PLQY (at least 80%) and, at the same time, a high stability under photon irradiation, heat, and when fully immersed in water. For this reason, the LHP/MₓO_{y} composites produced so far are still not able to meet the requirements to be employed as phosphors in optoelectronic devices such as displays(LCD backlighting, color converting filters in OLED and µLED), light emitting diodes, sensors (X-ray scintillators, UV sensors etc.) and solar cells.

Accordingly, there is a need for novel methods to produce metal halide nanocomposites without the drawbacks of the already known methods. Document 1 discloses a method for the preparation of a nanocomposite comprising CsPbBr3-m-SiO2. Document 1: DMITRY N. DIRIN ET AL: "Harnessing Defect-Tolerance at the Nanoscale: Highly Luminescent Lead Halide Perovskite Nanocrystals in Mesoporous Silica Matrixes",NANO LETTERS, vol. 16, no. 9, 23 August 2016 (2016-08-23), pages 5866-5874,US ISSN: 1530-6984, DOI: 10.1021/ acs.nanolett.6b02688

### OBJECT OF THE INVENTION

The aim of the present invention is to provide a novel method to produce metal halide nanocomposite materials with a strong PL emission and that are highly stable.

The aforementioned objective has been met according to the method of claim 1 and to a nanocomposite according to claim 13 and its use according to claims 14 and 15. Preferred embodiments are set out within the dependent claims. In particular, it is provided a method for the preparation of luminescent nanocomposites comprising metal halide nanocomposites nanocrystals co-embedded with inorganic salts in the pores of a porous metal oxide matrix comprising the steps of:
a) preparing a mixture comprising at least a metal halide, a combination of inorganic salts, and porous metal oxide particles in the absence of an organic solvent;
b) heating above the melting temperature of the mixture of step a);
c) cooling to obtain the nanocomposite.

The method of the invention allows for the preparation of nanocomposite materials composed of porous metal oxide particles, for example mesoporous SiO₂ (m-SiO₂), whose pores are filled for example with light emitting metal halide nanocrystals (for example CsPbBr₃) and other organic and/or inorganic salts (e.g. KNO₃, NaBr) coming from the molten salt mixture in which the preparation is carried out. The invention involves the use of a mixture of organic and/or inorganic salts (molten salts) as the synthesis medium, in which the reaction occurs. The molten salts medium not only enables the formation of NCs, but also allows for their nucleation and growth inside the m-SiO₂ pores without the use of any organic solvent or surfactants. In addition, the m-SiO₂ pores in the final composite can be either partially or completely sealed, depending on the specific molten salts employed. This, in turn, results in nanocomposites having very high PLQY values (around 90%) and, at the same time, an excellent stability against moisture, photon irradiation, heat, and water.

Furthermore, the method of the invention has a universality and can be utilized to fabricate various types of nanocomposites such as metal halide, metal oxide, metal chalcogenide or metal pnictide embedded in different matrixes. Particularly, the composite obtained with the method of the invention has luminescence properties.

The obtained nanocomposites can be utilized as color down-converting materials in optoelectronic devices: displays (LCD backlighting, color converting filters in OLED and µLED), light emitting diodes, sensors (X-ray scintillators, UV sensors etc.) and solar cells.

Moreover, the very high stability (against water, acid treatment and high temperature) of these nanocomposites makes them optimal candidates as tracers and tags for oil industry, a new emerging field. In upstream oil industry, the composites can be used as oil tracers for detecting hydrocarbon flow paths during crude oil extraction. In midstream and downstream oil industry, the composites can be used as security tags of crude oil and refined products through production, refining, shipping, storage, transportation and distribution stages.

According to one embodiment of the invention, metal halide can be selected from the group consisting of CsBr, CsCl, PbBr₂, PbCl₂, CsI, PbI₂ or mixture thereof, preferably a mixture of CsBr and PbBr₂(to produce perovskite CsPbBr₃).

The inorganic salts, constituting the molten salts mixture, can be selected from the group consisting of inorganic compounds of formula MₐX_{b} or mixture thereof, wherein M represents one or more metal cations selected from Li, Na, K, Rb, Cs, Mg, Ca, Sr, Ba, Al, Ce, Co, Fe, Mn, La, Ni; X represents one or more anions selected from the group consisting of halide, nitrate, nitrite, perchlorate, carbonate, thiocyanate, sulfate, sulfite, phosphate and phosphite; a and b are independently an integer ranging from 1 to 3.

Preferably, inorganic salts can be selected from the group consisting of KNO₃, KBr, KCl, NaNO₃, KBr, NaBr, LiBr, RbBr, or mixture thereof, more preferably a mixture of KNO₃ and KBr or a mixture of KNO₃, NaNO₃ and KBr.

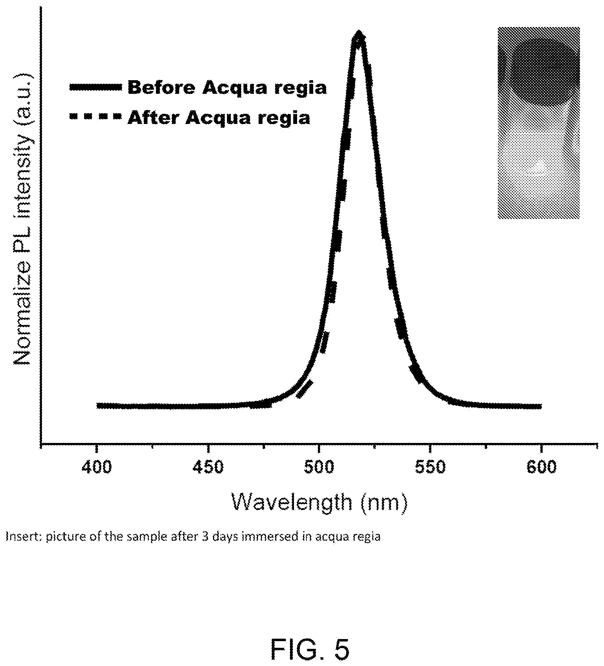

In a preferred embodiment the molten salt mixture is a mixture of KNO₃:NaNO₃:KBr (in a molar ratio of 10:5:5) as the molten salts medium. The resulting nanocomposites had an enhanced stability against water, due to the complete sealing of the pores which occurs thanks to this specific combination of molten salts. The closure of the pores can be inferred from the exceptional stability of the nanocomposites which do not degrade neither when immersed in aqua regia (a mixture of nitric acid and hydrochloric acid) for 3 days (Figure 5).

In an alternative embodiment, good results are also obtained, when working with a mixture of KNO₃ and KBr (KNO₃:KBr molar ratio of 15:5) at 350°C (melting temperature of this specific salt mixture) to obtain a metal halide nanocomposite. In this case, the pores of the metal oxide particles result to be partially closed.

In an embodiment, porous metal oxide particles are mesoporous metal oxide particles. Porous metal oxide particles can be selected from the group consisting of silica particles, aluminum oxide particles, titanium oxide particles, zinc oxide particles and zeolite particles, preferably mesoporous silica particles. Preferably, the mesoporous metal oxide particles have a particle size equal or below 1 µm.

After the step of cooling, the method of the invention can provide for a step d) of washing the nanocomposite obtained from step c) with a polar solvent, preferably selected from the group consisting of water, dimethylsufoxide and dimethylformamide, more preferably water.

Moreover, the method of the invention can further comprise the step e) of drying the nanocomposite of step d).

The present invention provides a way to produce nanocomposites made of strongly emissive metal halide nanocrystals co-embedded with inorganic salts in the pores of a mesoporous metal oxide matrix. The resulting products exhibit strong PL emission and are highly stable.

Advantageously, the composite is prepared in a single reaction step by preparing a mixture of precursors needed to prepare the emitting nanocrystals (for example, CsBr and PbBr₂ for perovskite CsPbBr₃), a mixture of salts that will form a melt (also known as molten salts) at the desired reaction temperature, and the desired mesoporous metal oxide particles. The resulting powder is then heated up to the melting point of the salts mixture, for example in a furnace, for 60 min, under ambient conditions. Afterward, the product is removed from the furnace and is naturally allowed to cool down to room temperature, resulting in a monolith. Then, the monolith can be washed with a polar solvent to isolate the metal oxide particles from inorganic salts and any light emitting crystals present outside the pores of the metal oxide particles (for example bulk-like CsPbBr₃ crystals, which are highly soluble in polar solvents). The remaining powder can be dried in vacuum oven at 40 °C, after which it is ready for further characterization or for application in devices fabrication.

The reaction can occur only above the melting temperature of the mixture of salts that is employed, in other words, only when the salt mixture becomes liquid. The melting temperature of a mixture of salts, in turn, can be controlled by the selection of the inorganic salts and their molar ratio. This procedure leads to an optimal composite product.

Given the relatively low reaction temperature, the structure and size of the metal oxide particles is preserved at the end of the reaction: metal oxide particles are not fusing together or irreversibly aggregating and the pores do not collapse. This, in turn, allows for optimizing the optical properties of the composites: if the size of metal oxide particles is small enough (1 µm or smaller) it is possible to excite all the CsPbBr₃ NCs inside the metal oxide particles (considering that the excitation wavelengths are typically in the UV or blue region of the spectrum) and, at the same time, to minimize self-absorption phenomena. As an example, CsPbBr₃/SiO₂ composites having a bulky SiO₂ matrix require etching treatments (HF etching) in order to optimize their PL emission (see Q. Zhang et al., Nat. Commun., vol. 11, no. 1, pp. 1-9, 2020). On the contrary, the nanocomposite obtained with the method of the invention does not require any post-synthesis etching procedure.

The use of molten salts is also considered to be responsible for the partial sealing of the pores of the metal oxide particles, and is therefore of utmost importance to confer high stability to the final nanocomposite material. The fact that the pores are partially closed can be inferred from the stability of the nanocomposites obtained with the method of the invention: they can be washed with water and they retain their PL emission for days when immersed in water. On the contrary, in other publications in which CsPbBr₃ NCs have been grown inside m-SiO₂ without the use of molten salts, the resulting compounds could not sustain any washing step with water since the washing step leads to the dissolution of crystals inside the pores (see P. Chen et al., Nanoscale, issue 35, pp. 16499-16507, 2019; D. N. Dirin et al., Nano Lett., vol. 16, no. 9, pp. 5866-5874, 2016; and Q. Zhang et al., Nat. Commun., vol. 11, no. 1, pp. 1-9, 2020). In yet another work, Zhang et al. observed that sealing of the SiO₂ pores can be achieved only at temperatures as high as 700°C when working in the absence of molten salts (Q. Zhang et al., Nat. Commun., vol. 11, no. 1, pp. 1-9, 2020). Indeed, the corrosiveness of alkali salts to various metal oxides has been known for decades. In this regard, the etching effect of molten salts has been even used to design mesoporous structures starting from bulk nonporous metal oxides. Notably, mesoporous silica, as emerged from several studies, is particularly reactive towards molten salts.

In the following, the present invention shall be illustrated by means of some examples, which are not construed to be viewed as limiting the scope of the invention.

### BRIEF DESCRIPTION OF THE DRAWINGS

The present invention will be described in detail with reference to the figures in the annexed drawings, which show purely illustrative and non-exhaustive examples in which:

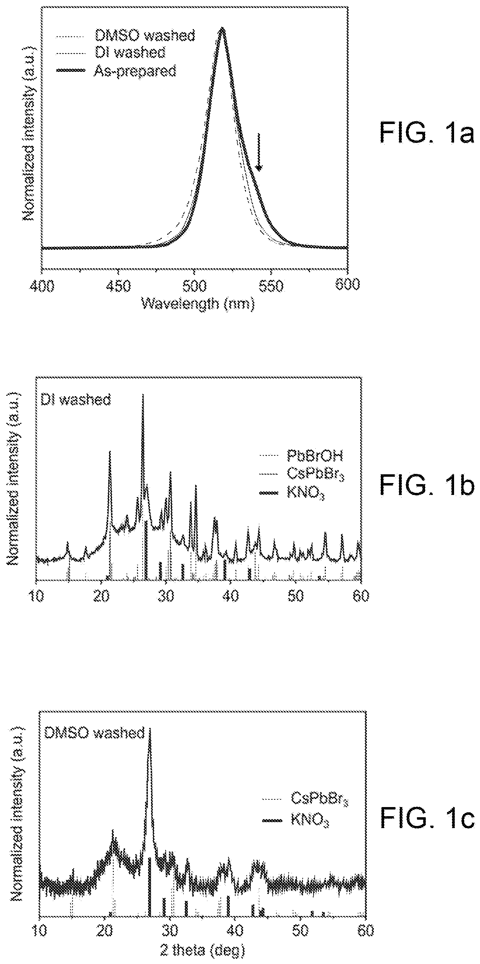

- Figure 1 illustrates (a) PL spectra of CsPbBr₃-salt-silica composites before (thick solid curve) and after different washing steps: cleaning with the use of deionized (DI) water (solid curve); DI water followed by DMSO (dashed curve). An arrow indicates the PL emission corresponding to bulk CsPbBr₃; (b,c) XRD pattern of CsPbBr₃-salt-silica composites obtained after one washing step with water (b) and after a subsequent washing step with DMSO (c). The bulk reflections of PbBrOH (ICSD 98-002-83-13), CsPbBr₃ orthorhombic (ICSD 98-009-7851) and KNO₃ cubic (ICSD 98-000-0384) are reported by means of vertical bars.
- Figure 2 illustrates a) TEM image of the empty m-SiO₂ MCM-41 template; b-c) TEM images of the CsPbBr₃-KNO₃/m-SiO₂ nanocomposites.
- Figure 3 illustrates (a) DLS curves obtained for starting m-SiO₂ particles and CsPbBr₃-salt/m-SiO₂ composites prepared using KNO₃:KBr (in a molar ratio of 15:5) and dispersed in water; (b) PLQY of CsPbBr₃-salt/m-SiO₂ composites washed with either DI water or DMSO, and bare CsPbBr₃ NCs before (I) and after annealing at 180°C in Argon for 3h (II) or 2h (II'); (c) Time-dependent absolute PLQY of CsPbBr₃-salt/m-SiO₂ composites (washed with either DI water or DMSO) and CsPbBr₃ NCs immersed in 100% water.
- Figure 4 illustrates PL spectra of CsPb(Cl,Br)₃ based composites with the PL tunable of from 520 nm (curve 1) to 443 nm (curve 7) by varying the halide composition.
- Figure 5 illustrates PL spectra of a metal halide nanocomposite prepared using KNO₃:NaNO₃:KBr (in a molar ratio of 10:5:5) as the molten salts medium, before and after immersion in aqua regia.
- Figure 6 illustrates the normalized PL intensity of the composite of the invention recorded during different type of accelerated test conditions (HF= High Flux, HH= High Humidity, HT= High Temperature).
- Figure 7 illustrates the schematic of the LCD device: 1- light source with pink color, 2 - the spectra of the light source, 3 - representation of red (marked as "R", which is 630 nm wavelength's peak) and blue light (marked as "B", which is 450 nm wavelength's peak), 4 - polymer film with luminescent nanocomposites of present disclosure, 5 - representation of red (R), green(G) and blue (B) light, 6 - LCD matrix, 7 - color filters, 8 - resulting images.
- Figure 8 illustrates the TEM image of the CsPbBr_{3/}SiO₂ nanocomposite synthesized at 320°C. PL emission of CsPbBr₃/SiO₂ nanocomposites synthesized at 320°C, 330°C or 340°C.

### DETAILED DESCRIPTION OF THE INVENTION

### EXAMPLE

### Example 1. Preparation of emissive LHP-salt-silica composite

A mixture of CsBr, PbBr, KNO₃ and KBr (molar ratio of 1:1:15:5), and mesoporous silica (commercial name MCM-41, Sigma Aldrich code 643645), having particles size of ~1 µm with a very broad size distribution, and pores size of 3.3 nm, were mixed in a ceramic crucible and heated up to 350°C in a furnace for 60 minutes under air. The resulting product was allowed to cool down to room temperature, forming a monolith which was washed with a polar solvent (preferably water, but other solvents such as dimethylsufoxide (DMSO) or dimethylformamide (DMF) can be also used, with no major differences in optical, structural and chemical properties of the final product) in the following way: 100 mg of product was loaded in a vial with 1 ml of water and sonicated for 10 min, centrifuged at 5000 rpm, and the supernatant was discarded. This procedure was repeated 5 times in order to quantitatively remove all the inorganic salts and all the CsPbBr₃ crystals that had formed outside of the m-SiO₂ particles. The final powder was eventually dried in a vacuum oven at 40°C, delivering ~90 mg of final CsPbBr₃-salt-silica composite. The synthesis yield is around 90%.

The obtained composite presents partially sealed SiO₂ pores.

### Example 2. XRD and PL/Abs characterization of CsPbBr₃/KNO₃/SiO₂ nanocomposites

The product of Example 1, before the washing step, showed a PL emission peak at 520 nm, arising from the CsPbBr₃ NCs inside the m-SiO₂, with a shoulder at longer wavelengths, which was attributed to the presence of bulk-like perovskite crystals located outside the m-SiO₂ matrix (see Figure 1a). After the washing steps with water, the PL emission of the resulting sample was peaked at 520nm without a shoulder at lower energies, full width at half maximum (FWHM) of 22 nm (102 meV) and a PLQY as high as 87%.

The XRD pattern of the product after the cleaning with water is dominated by the peaks of the PbBrOH phase which, most likely, formed upon the reaction of Pb-Br compounds with water and which is insoluble in water (Figure 1b). Minor reflections ascribable to KNO₃ are also observed. On the other hand, it is not possible to assess if any CsPbBr₃ phase is present as the corresponding reflections are covered by those of the PbBrOH phase. Thus, in order to have a more clear structural analysis, the composites was cleaned with DMSO, which does not lead to the formation of hydroxide compounds. The inventors highlight here that this washing method results in a final product having the same PLQY of that obtained by cleaning with water. The XRD pattern of the DMSO washed product indicated the absence of the PbBrOH phase and the presence of orthorhombic CsPbBr₃ (ICSD 98-009-7851) and KNO₃, most likely filling silica pores together with CsPbBr₃ NCs (Figure 1c). A broad peak ranging from 15° to 35° was ascribed to the SiO₂ matrix, which was amorphous (see Figure 1b).

### Example 3. Electron Microscopy, EDS and HAADF characterization

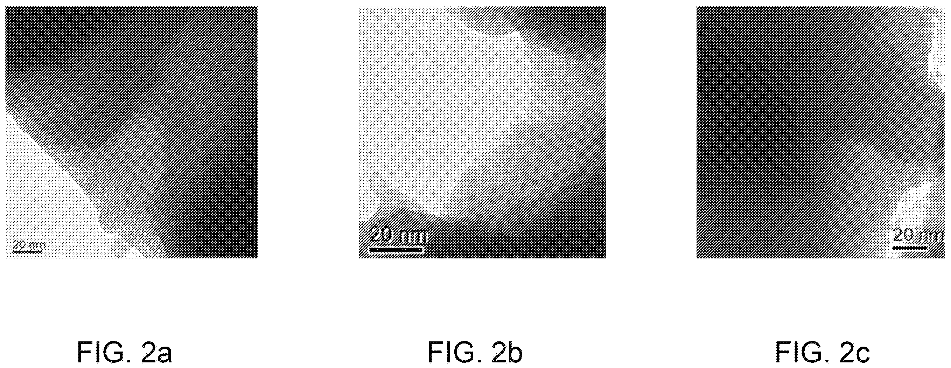

To better understand the morphology and the nanostructure of the CsPbBr₃/KNO₃/SiO₂ product of Example 1, the inventors performed an in-depth TEM characterization. High-resolution (HR) TEM analysis revealed that the mesoporous nature of the SiO₂ was preserved after the molten salts synthesis procedure, with pores having a mean diameter of 3.3nm (Figure 2a-c). Moreover, it was possible to assess that the product of the method of the invention, after washing, was composed of m-SiO₂ particles whose pores were filled with small NCs (Figure 2b-c). Scanning transmission electron microscopy (STEM) energy dispersive X-ray spectrometry (EDS) analysis indicated the presence of inorganic NCs containing Cs, Pb, Br and K inside the pores of m-SiO₂, in agreement with our XRD results, and no presence of undesired inorganic particles outside the m-SiO₂.

### Example 4. Stability test

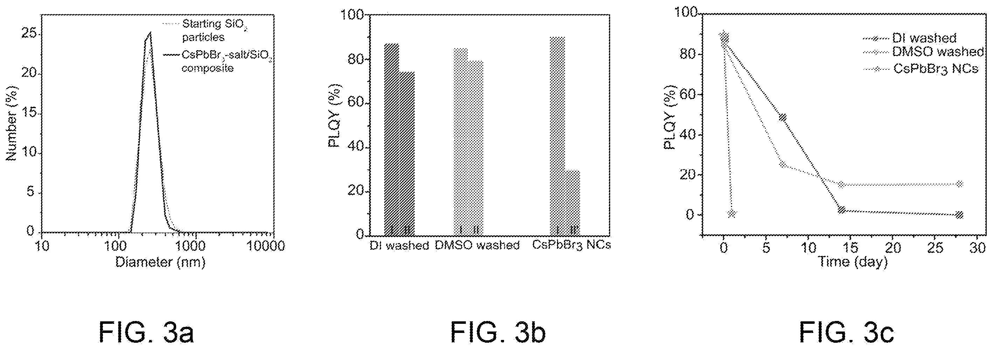

In order to assess if the m-SiO₂ particles aggregate or merge during the production of the composites, the inventors tested the method of the invention by employing a commercial m-SiO₂ particles (Sigma Aldrich code 748161) having a mean diameter of 200nm with a spherical shape and 4nm pore size. This because MCM-41 m-SiO₂, used in the experiment disclosed above, is characterized by a broad size distribution, making it hard to assess if aggregation occurs after the composites preparation. The dynamic light scattering (DLS) analysis, performed by dispersing m-SiO₂ or CsPbBr₃-salt/SiO₂ particles in water, clearly indicated that the method of the invention does not lead to any aggregation or merging of SiO₂ particles (Figure 3a), contrarily to what happens when working in the absence of molten salts at higher temperatures (Q. Zhang et al., Nat. Commun., vol. 11, no. 1, pp. 1-9, 2020).

CsPbBr₃/m-SiO₂ composites prepared using KNO3:KBr (in molar ratio of 15:5), made with MCM-41 m-SiO₂, and washed by using either water or DMSO were subjected to various tests in order to assess their stability under heating (thermal stability) or to water exposure (water stability). The bare CsPbBr₃ NCs obtained via a standard colloidal approach (reference standard) were also tested in parallel (L. Protesescu et al. Nano letters 15.6 (2015): 3692-3696).

The thermal stability was assessed by monitoring the variation of the PLQY of the sample before and after annealing at 180°C for 3h in argon atmosphere. The PLQY of the composites went from -85-87% to -75-80%, whereas the PLQY of the bare CsPbBr₃ NCs dropped from 90 % to 30% after annealing at 180°C in argon for 2 h. (Figure 3b)

The stability against water was assessed by dispersing the samples in deionized water and monitoring the resulting PLQY over time. As shown in figure 3c, the CsPbBr₃-salts/m-SiO₂ composites showed very slow PLQY decrements compared to the bare NCs. The PLQY of the composites obtained with the method of the invention was still around 50% after 7-8 days upon immersion in water (Figure 3c). On the other hand, the CsPbBr₃ NCs could not survive in water and their PL was completely quenched after only several minutes. The results indicated that, the molten salts were responsible of a partial sealing of the pores of m-SiO₂, reason why the composites could be washed in water and their degradation under water was strongly reduced. Indeed, the salts present in the pores (KNO₃) together with CsPbBr₃ NCs, are soluble in water, and, are not able to protect the perovskite emitters.

### Example 5. Extension of the invention to different compositions

The method of the invention can be used for the production of CsPbX₃ NCs with mixed halide compositions. In details, the inventors employed a mixture of PbCl₂/PbBr₂, CsBr/CsCl, molten salts (KNO₃ and a mixture of KBr/KCl) and m-SiO₂ for the preparation of CsPb(Cl,Br)₃-SiO₂ composites.

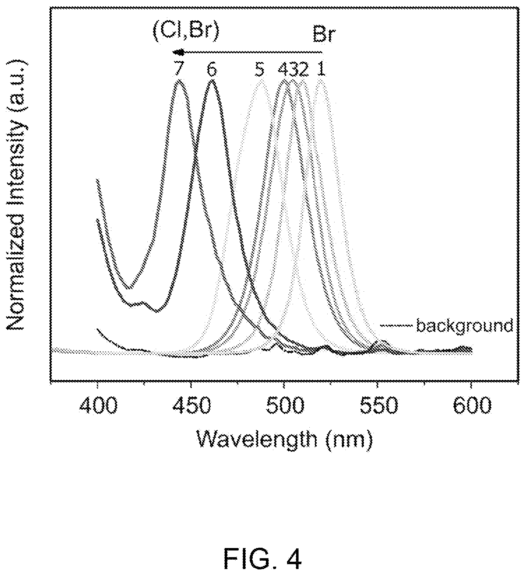

A mixture of CsBr, CsCl, PbBr₂, PbCl₂, KBr, KCl and KNO₃ was prepared in a ceramic crucible and heated up to 350°C in a furnace for 60 minutes under air. After cooling down to room temperature, the formed monolith was washed with water and then, was dried in a vacuum oven at 40°C to result final composite powder. Depending on the specific inorganic salts ratio different sample having different halide composition and consequently different emission wavelengths could be prepared (Figure 4). In details, the samples with a PL emission from 500nm to 510nm were prepared using a CsBr: (PbBr₂+PbCl₂) :Kbr ratio of 1:1:5 where the PbBr₂:PbCl₂ ratio was varied from 0.11:0.89 to 0.33:0.67. The samples emitting from 487 to 443nm were prepared using CsCl:PbCl₂: (KBr+KCl) of 1:1:5 where the KBr:KCl ratio was varied from 5:0 to 2.5:2.5.

### Example 6. Preparation of nanoparticles of emissive LHP-salt-silica composite in customized m-SiO₂

Emissive LHP-salt-silica composite was also synthesized in customized m-SiO₂. The customized m-SiO₂ is composed of particles having an overall smaller average size compared to commercial one. The TEM analysis revealed that the average size of synthesized m-SiO2 particles is about 100 nm. (Figure x) Smaller size of m-SiO2 particles will expand the range of applications of the resulting nanocomposites, especially in those fields where small emissive composites, ideally not affected by scattering effects, are required, such as color conversion in display and lighting.

This Functionalized Nanocomposite samples are prepared in three steps:
1) **Synthesis of m-SiO2 nanoparticles.** 1g of Cetyltrimethylammonium bromide (CTABr) is dissolved in 480 ml of distilled water under string in a flask. Then, 3.5 ml of NaOH (2 M in distilled water) is added to flask and the resulting mixture is heated to 70 °C for 1h. Subsequently, 5 ml of tetraethoxysilane is injected into mixture at a 10 ml/min injecting speed. The mixture is stirred for 2h at 70 °C, and the resulting product is washed five times with distilled water. 700 mg of products is eventually calcined at 550 °C for 5 h to remove the CTABr template phase.
2) **Growth of CsPbBr3 inside the pores of SiO₂.** CsBr (0.6 mmol), PbBr₂ (0.6 mmol), KBr (0.5 mmol), KNO₃ (1 mmol), NaNO₃ (0.5 mmol) and m-SiO₂ (0.5 mmol) are mixed via grinding with a mortar and pestle. Then, the mixture is heated in a crucible at 320°C for 60 minutes under air and allowed to cool down to room temperature (it is also possible to run the reaction at 330 or 340°C). The final CsPbBr₃ /SiO₂ composites are cleaned with DMSO and ethanol 3 times.
3) **Surface functionalization of the composites.** 9 mg of nanocomposites are suspended in 5 mL of octadecene under stirring at 70°C. An excess of trimethoxy(octadecyl)silane (42µl, 0.1mmol) is added to the suspension which is stirred (at 70°C) for 4 hours. The resulting solid product is isolated by centrifugation and then washed with anhydrous toluene three times.

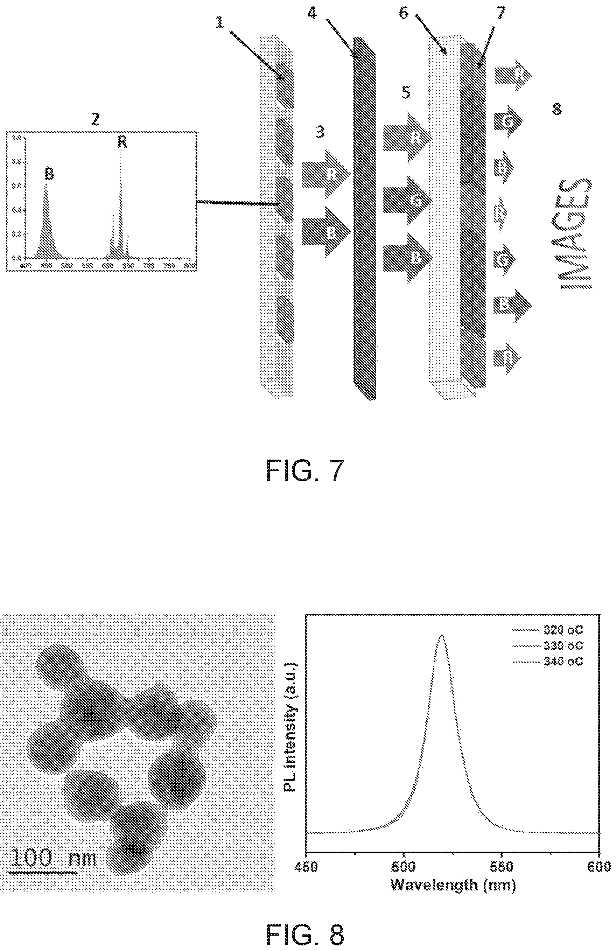

TEM image of the CsPbBr_{3/}SiO₂ nanocomposite synthesized at 320°C and PL emission of CsPbBr_{3/}SiO₂ nanocomposites synthesized at 320°C, 330°C or 340°C are illustrated in Figure 8.

### Example 7. Stability tests in polymer films

The emissive LHP-salt-silica composite reported in the example 6, was subjected to stability tests in polymer films for colour conversion applications.

To produce a polymer film containing emissive LHP-salt-silica composite material, the emissive LHP-salt-silica particles were dispersed in IBOA (Isobornyl acrylate monomer) together with a certain amount of a photoinitiator, TiO₂ nanoparticles, acting as a light scattering agent, and SiO₂ nanoparticles, acting as a viscosity modifier. The concentration of nanocomposite particles was kept at 0.5 wt%. The mixture was blade coated in between barrier films (3M^{™} FTB3-50 with 50um thickness and VWTR < 0.001 g/m²-day@20 °C) and cured under UV light (800 mW/cm² light intensity) for 1 minute. The formed film had a total thickness of 300 µm. The resulting polymer composite was characterized by an emission peak centered at 522 nm with a FWHM 18 nm and a PLQY of ~62 %.

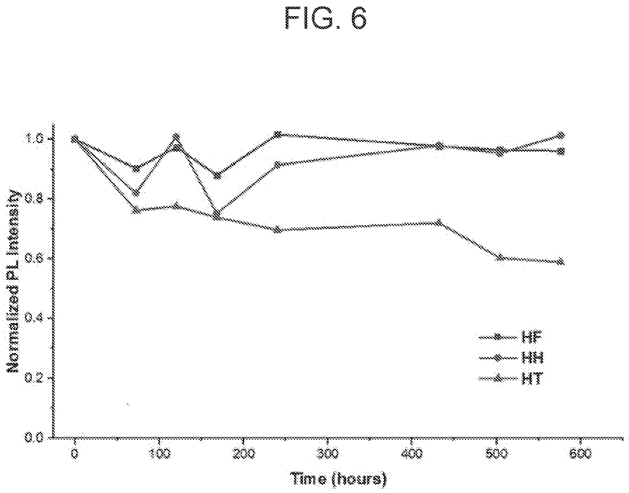

The obtained emissive polymer composite films were tested under High Flux (HF), High Humidity (HH) and High Temperature (HT), also called accelerated reliability tests. High flux test consists in exposing the composite film under 100 mW/cm² of blue light (450 nm wavelength) and 60°C. High humidity test is done by exposing the composite film to an environment with 90% RH at 60°C. High temperature test is done by exposing the composite film to 10 mW/cm² of blue light (450 nm wavelength) at 60°C. In all these accelerated test conditions, the film need to maintain more than 50% from its original PL intensity. Results are illustrated in figure 6.

During the accelerated test, the emission intensity of the films was monitored and recorded. Figure 6 below shows the variation of the PL intensity of the films under the three tests as a function of the test time. The composite films show stable PL intensity under these harsh condition for more than 500 hours.

Thanks to their high stability, the emissive composite films could be used for color conversion in displays. For this application, the emissive LHP-salt-silica composite will down convert the blue light to green to obtain white light (RGB color) when combined with magenta LED backlight. as shown in Figure 7.

Figure 7 illustrates one embodiment of display device. The polymer composite with the emissive LHP-salt-silica composite 4 is used to down convert blue light 3 from the pink LED source, which emits blue (450 nm) and red (630 nm) spectrum 1. The part of blue light is converted into green light with emission center > 522 nm and FWHM < 25 nm and the red emission just pass through the polymer composite. The resulting three RGB colors 5 are passing through LCD matrix 6 and then color filters 7 giving the image 8.

## Claims

1. A method for the preparation of luminescent nanocomposites comprising metal halide nanocrystals co-embedded with inorganic salts in the pores of a porous metal oxide matrixcomprising the steps of:
a) preparing a mixture comprising at least a metal halide, a combination of inorganic salts, and porous metal oxide particles in the absence of an organic solvent;
b) heating above the melting temperature of the mixture of step a);
c) cooling to obtain the nanocomposite.

2. The method according to claim 1, **characterized in that** said metal halide is selected from the group consisting of CsBr, CsCl, PbBr₂, PbCl₂, CsI, PbI₂ or mixture thereof.

3. The method according to claim 2, **characterized in that** said metal halide is a mixture of CsBr and PbBr₂.

4. The method according to claim 1, **characterized in that** said inorganic salt is selected from inorganic compounds of formula MₐX_{b}, wherein M represents one or more metal cations selected from Li, Na, K, Rb, Cs, Mg, Ca, Sr, Ba, Al, Ce, Co, Fe, Mn, La, Ni; X represents one or more anions selected from the group consisting of halide, nitrate, nitrite, perchlorate, carbonate, thiocyanate, sulfates, sulfites, phosphates and phosphites; a and bare independently an integer ranging from 1 to 3.

5. The method according to claim 4, **characterized in that** said inorganic salt is selected from the group consisting of KNO₃, KBr, KCl, NaNO₃, KBr, NaBr, LiBr, RbBr or mixture thereof.

6. The method according to claim 5, **characterized in that** said inorganic salt is selected from a mixture of KNO₃ and KBr and a mixture of KNO₃, NaNO₃ and KBr.

7. The method according to claim 1, **characterized in that** said porous metal oxide particles are mesoporous metal oxide particles.

8. The method according to claim 1, **characterized in that** said porous metal oxide particles are selected from the group consisting of silica particles, aluminum oxide particles, titanium oxide particles, zinc oxide particles and zeolite particles.

9. The method according to claim 7, **characterized in that** said mesoporous metal oxide particles have a particle size equal or below 1 µm.

10. The method according to claim 7, **characterized in that** said mesoporous metal oxide particles are m-SiO₂.

11. The method according to claim 1, further comprising the step of d) washing said nanocomposite obtained from step c) with a polar solvent.

12. The method according to claim 11, **characterized in that** said polar solvent is selected from the group consisting of water, dimethylsulfoxide and dimethylformamide.

13. The method according to claim 1, further comprising the step of e) drying the nanocomposite of step d).

14. A luminescent nanocomposite obtained with the method according to any of claims 1-13.

15. Optoelectronic device comprising the nanocomposite of claim 14.

16. Tracer and tagging material for oil industry comprising the nanocomposite of claim 14.

17. A polymer film containing luminescent nanocomposite obtained with the method according to any of claims 1-13.

## Patentansprüche

1. Verfahren zur Herstellung von lumineszierenden Nanokompositen, die Metallhalogenid-Nanokristalle umfassen, die zusammen mit anorganischen Salzen in den Poren einer porösen Metalloxidmatrix eingebettet sind, umfassend die folgenden Schritte:
a) Herstellen einer Mischung, die mindestens ein Metallhalogenid, eine Kombination anorganischer Salze und poröse Metalloxidpartikel umfasst, in Abwesenheit eines organischen Lösungsmittels;
b) Erhitzen über die Schmelztemperatur der Mischung aus Schritt a);
c) Abkühlen, um das Nanokomposit zu erhalten.

2. Verfahren nach Anspruch 1, **dadurch gekennzeichnet, dass** das Metallhalogenid ausgewählt ist aus der Gruppe bestehend aus CsBr, CsCl, PbBr₂, PbCl₂, CsI, PbI₂ oder Mischung davon.

3. Verfahren nach Anspruch 2, **dadurch gekennzeichnet, dass** das Metallhalogenid eine Mischung aus CsBr und PbBr₂ist.

4. Verfahren nach Anspruch 1, **dadurch gekennzeichnet, dass** das anorganische Salz ausgewählt ist aus anorganischen Verbindungen der Formel MₐX_{b}, wobei M ein oder mehrere Metallkationen darstellt, die aus Li, Na, K, Rb, Cs, Mg, Ca, Sr, Ba, Al, Ce, Co, Fe, Mn, La, Ni ausgewählt sind; X ein oder mehrere Anionen darstellt, die aus der Gruppe ausgewählt sind, die aus Halogenid, Nitrat, Nitrit, Perchlorat, Carbonat, Thiocyanat, Sulfaten, Sulfiten, Phosphaten und Phosphiten besteht; a und b unabhängig voneinander eine ganze Zahl im Bereich von 1 bis 3 sind.

5. Verfahren nach Anspruch 4, **dadurch gekennzeichnet, dass** das anorganische Salz ausgewählt ist aus der Gruppe bestehend aus KNO₃, KBr, KCl, NaNO₃, KBr, NaBr, LiBr, RbBr oder Mischung davon.

6. Verfahren nach Anspruch 5, **dadurch gekennzeichnet, dass** das anorganische Salz aus einer Mischung aus KNO₃ und KBr und einer Mischung aus KNO₃, NaNO₃ und KBr ausgewählt ist.

7. Verfahren nach Anspruch 1, **dadurch gekennzeichnet, dass** die porösen Metalloxidpartikel mesoporöse Metalloxidpartikel sind.

8. Verfahren nach Anspruch 1, **dadurch gekennzeichnet, dass** die porösen Metalloxidpartikel ausgewählt sind aus der Gruppe bestehend aus Siliciumdioxidpartikeln, Aluminiumoxidpartikeln, Titanoxidpartikeln, Zinkoxidpartikeln und Zeolithpartikeln.

9. Verfahren nach Anspruch 7, **dadurch gekennzeichnet, dass** die mesoporösen Metalloxidpartikel eine Partikelgröße von 1 µm oder weniger aufweisen.

10. Verfahren nach Anspruch 7, **dadurch gekennzeichnet, dass** die mesoporösen Metalloxidpartikel m-SiO₂ sind.

11. Verfahren nach Anspruch 1, das ferner den Schritt d) des Waschens des aus Schritt c) erhaltenen Nanokomposits mit einem polaren Lösungsmittel umfasst.

12. Verfahren nach Anspruch 11, **dadurch gekennzeichnet, dass** das polare Lösungsmittel ausgewählt ist aus der Gruppe bestehend aus Wasser, Dimethylsulfoxid und Dimethylformamid.

13. Verfahren nach Anspruch 1, das ferner den Schritt e) des Trocknens des Nanokomposits aus Schritt d) umfasst.

14. Lumineszierendes Nanokomposit, das mit dem Verfahren nach einem der Ansprüche 1-13 erhalten wird.

15. Optoelektronische Vorrichtung, die das Nanokomposit nach Anspruch 14 umfasst.

16. Markierungs- und Kennzeichnungsmaterial für die Ölindustrie, das das Nanokomposit nach Anspruch 14 umfasst.

17. Polymerfilm, der ein lumineszierendes Nanokomposit enthält, das mit dem Verfahren nach einem der Ansprüche 1-13 erhalten wurde.

## Revendications

1. Méthode de préparation de nanocomposites luminescents comprenant des nanocristaux d'halogénures métalliques co-intégrés avec des sels inorganiques dans les pores d'une matrice poreuse d'oxyde métallique, comprenant les étapes suivantes :
a) préparer un mélange comprenant au moins un halogénure métallique, une combinaison de sels inorganiques et des particules poreuses d'oxyde métallique en l'absence de solvant organique ;
b) chauffer au-dessus de la température de fusion du mélange de l'étape a) ;
c) refroidir pour obtenir le nanocomposite.

2. Méthode selon la revendication 1, **caractérisée par le fait que** l'halogénure métallique est choisi dans le groupe constitué par CsBr, CsCl, PbBr₂, PbCl₂, CsI, PbI₂ ou un mélange de ceux-ci.

3. Méthode selon la revendication 2, **caractérisée par le fait que** l'halogénure métallique est un mélange de CsBr et de PbBr₂.

4. Méthode selon la revendication 1, **caractérisée en ce que** ledit sel inorganique est choisi parmi les composés inorganiques de formule MₐX_{b}, où M représente un ou plusieurs cations métalliques choisis parmi Li, Na, K, Rb, Cs, Mg, Ca, Sr, Ba, Al, Ce, Co, Fe, Mn, La, Ni ; X représente un ou plusieurs anions choisis dans le groupe constitué par les halogénures, les nitrates, les nitrites, les perchlorates, les carbonates, les thiocyanates, les sulfates, les sulfites, les phosphates et les phosphites ; a et b sont indépendamment un nombre entier compris entre 1 et 3.

5. Méthode selon la revendication 4, **caractérisée par le fait que** ledit sel inorganique est choisi dans le groupe constitué de KNO₃, KBr, KCl, NaNO₃, KBr, NaBr, LiBr, RbBr ou un mélange de ceux-ci.

6. Méthode selon la revendication 5, **caractérisée par le fait que** ledit sel inorganique est choisi parmi un mélange de KNO₃ et de KBr et un mélange de KNO₃, NaNO₃ et de KBr.

7. Méthode selon la revendication 1, **caractérisé par le fait que** les particules poreuses d'oxyde métallique sont des particules mésoporeuses d'oxyde métallique.

8. Méthode selon la revendication 1, **caractérisée par le fait que** les particules poreuses d'oxyde métallique sont choisies dans le groupe constitué par les particules de silice, les particules d'oxyde d'aluminium, les particules d'oxyde de titane, les particules d'oxyde de zinc et les particules de zéolithe.

9. Méthode selon la revendication 7, **caractérisée par le fait que** les particules d'oxyde métallique mésoporeux ont une taille égale ou inférieure à 1 µm.

10. Méthode selon la revendication 7, **caractérisée par le fait que** les particules d'oxyde métallique mésoporeux sont des m-SiO₂.

11. Méthode selon la revendication 1, comprenant en outre l'étape d) de lavage dudit nanocomposite obtenu à l'étape c) avec un solvant polaire.

12. Méthode selon la revendication 11, **caractérisée par le fait que** le solvant polaire est choisi dans le groupe constitué par l'eau, le diméthylsulfoxyde et le diméthylformamide.

13. Méthode selon la revendication 1, comprenant en outre l'étape e) de séchage du nanocomposite de l'étape d)

14. Nanocomposite luminescent obtenu par la méthode selon l'une quelconque des revendications 1 à 13.

15. Dispositif optoélectronique comprenant le nanocomposite selon la revendication 14.

16. Matériau de traçage et de marquage pour l'industrie pétrolière comprenant le nanocomposite selon la revendication 14.

17. Film polymère contenant un nanocomposite luminescent obtenu par la méthode selon l'une quelconque des revendications 1 à 13.
